# EUROPÄISCHE PATENTSCHRIFT

(11) **EP 3 592 620 B1**
(45) Veröffentlichungstag und Bekanntmachung des Hinweises auf die Patenterteilung: **30.12.2020**
(21) Anmeldenummer: 18704914.3
(22) Anmeldetag: 01.02.2018
(51) Int. Cl.: B60T 13/74, B60T 7/04, B60T 17/22

(54) **ELEKTROMECHANISCHER BREMSKRAFTVERSTÄRKER UND HERSTELLUNGSVERFAHREN FÜR EINEN ELEKTROMECHANISCHEN BREMSKRAFTVERSTÄRKER**
ELECTROMECHANICAL BRAKE BOOSTER AND METHOD FOR PRODUCING AN ELECTROMECHANICAL BRAKE BOOSTER
SERVOFREIN ÉLECTROMÉCANIQUE ET PROCÉDÉ DE PRODUCTION D'UN SERVOFREIN ÉLECTROMÉCANIQUE

(30) Priorität: 06.03.2017 DE 102017203559
(43) Veröffentlichungstag der Anmeldung: 15.01.2020
(73) Patentinhaber: Robert Bosch GmbH, 70442 Stuttgart (DE)
(72) Erfinder: PANUNZIO, Giammaria, 71634 Ludwigsburg (DE); NAGEL, Willi, 71686 Remseck/Hochdorf (DE)
(86) Internationale Anmeldenummer: PCT/EP2018/052479
(87) Internationale Veröffentlichungsnummer: WO 2018/162151

(56) Entgegenhaltungen:
- EP-A1- 2 918 462
- WO-A1-96/17759
- DE-A1- 2 830 262
- DE-A1-102015 218 528
- FR-A1- 2 947 228

## Beschreibung

Die Erfindung betrifft einen elektromechanischen Bremskraftverstärker für ein Fahrzeug und ein Bremssystem für ein Fahrzeug. Des Weiteren betrifft die Erfindung ein Herstellungsverfahren für einen elektromechanischen Bremskraftverstärker.

### Stand der Technik

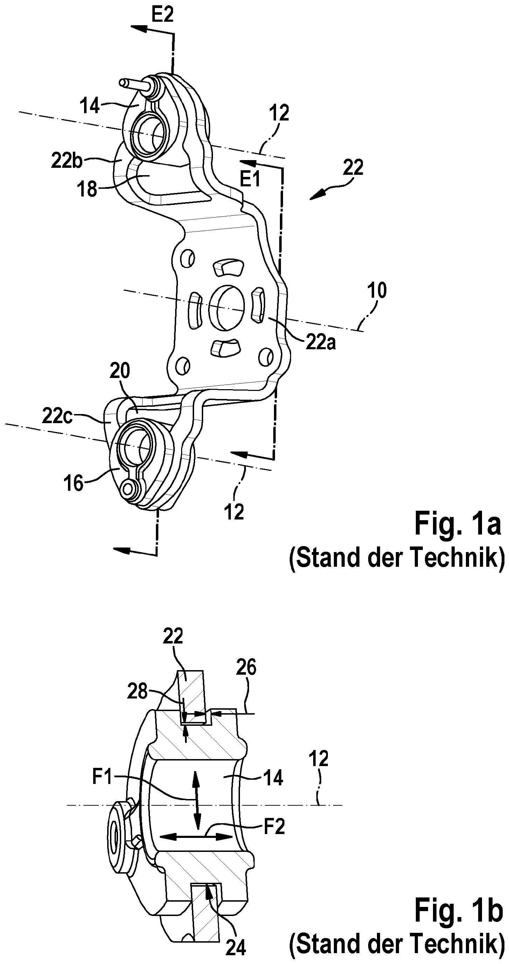

Fig. 1a und 1b zeigen schematische Teildarstellungen eines herkömmlichen elektromechanischen Bremskraftverstärkers, welcher der Anmelderin als interner Stand der Technik bekannt ist.

Der mittels der Fig. 1a und 1b wiedergegebene elektromechanische Bremskraftverstärker gemäß dem Stand der Technik umfasst eine (nicht dargestellte) Spindelmutter und einen (nicht skizzierten) elektrischen Motor, mittels dessen Betrieb die Spindelmutter in eine Rotation versetzbar ist. Die Spindelmutter liegt mit einer (nicht dargestellten) Spindel in einem Wirkeingriff vor, weshalb die Spindel mittels der in die Rotation versetzten Spindelmutter in eine Translationsbewegung entlang ihrer Spindelachse 10 versetzbar ist.

Der herkömmliche elektromechanische Bremskraftverstärker der Fig. 1a und 1b hat auch ein Gehäuse, auf dessen bildliche Darstellung jedoch verzichtet ist. Ein (nicht skizzierter) erster Zuganker und ein (nicht dargestellter) zweiter Zuganker sind jeweils so an dem Gehäuse befestigt, dass ihre Längsachsen 12 (im Wesentlichen) parallel zu der Spindelachse 10 verlaufen. Ein erstes Gleitlager 14 umgreift den ersten Zuganker. Entsprechend umgreift ein zweites Gleitlager 16 den zweiten Zuganker. Die Gleitlager 14 und 16 sind in je eine Öffnung 18 und 20 eines Bügels 22 eingesetzt, über welchen die Spindel entlang der Zuganker geführt ist. Der Bügel 22 ist derart gekröpft ausgebildet, dass ein Mittenabschnitt 22a des Bügels 22 in einer ersten Ebene E1 (senkrecht zu der Spindelachse 10) liegt, während ein erster Endabschnitt 22b des Bügels 22 mit der daran ausgebildeten ersten Öffnung 18 und ein zweiter Endabschnitt 22c des Bügels 22 mit der daran ausgebildeten zweiten Öffnung 20 in einer parallel zu der ersten Ebene E1 versetzten zweiten Ebene E2 ausgebildet sind.

Jedes der Gleitlager 14 und 16 weist eine umlaufende Nut 24 auf, in welche ein an der zugeordneten Öffnung 18 oder 20 liegender Randbereich des Bügels 22 eingreift. In Fig. 1b ist die an dem ersten Gleitlager 14 ausgebildete Nut 24 vergrößert dargestellt. Erkennbar ist, dass die Nut 24 derart ausgebildet ist, dass sowohl in einer parallel zu der Spindelachse 10 ausgerichteten Ebene ein erster Spalt 26 als auch in einer senkrecht zu der Spindelachse 10 ausgerichteten Raumrichtung ein zweiter Spalt 28 zwischen einer Innenwand der jeweiligen Nut 24 und dem eingreifenden Randbereich des Bügels 22 vorliegen. Sowohl eine mittels der Rotation der Spindelmutter auf das jeweilige Gleitlager 14 oder 16 übertragene Querkraft F1, welche in einer senkrecht zu der Spindelachse 10 ausgerichteten Ebene liegt, als auch eine auf das entlang des zugeordneten Zugankers gleitende Gleitlager 14 oder 16 ausgeübte Reibkraft F2 bewirken deshalb eine Verschiebung des in die Nut 24 eingreifenden Randbereichs des Bügels 22 innerhalb der Nut 24.

Eine derartige Anordnung ist aus der FR 2 947 228 A1 z.B. bekannt.

### Offenbarung der Erfindung

Die Erfindung schafft einen elektromechanischen Bremskraftverstärker für ein Fahrzeug mit den Merkmalen des Anspruchs 1, ein Bremssystem für ein Fahrzeug mit den Merkmalen des Anspruchs 9 und ein Herstellungsverfahren für einen elektromechanischen Bremskraftverstärker mit den Merkmalen des Anspruchs 10.

### Vorteile der Erfindung

Die vorliegende Erfindung schafft elektromechanische Bremskraftverstärker, deren jeweilige Spindel mittels einer Führung der Spindel entlang der Zuganker so vorteilhaft gelagert ist, dass ein Kippmoment während der Translationsbewegung der Spindel entlang ihrer Spindelachse nicht befürchtet werden muss. Stattdessen können auf die Spindel einwirkende/übertragene Querkräfte und Drehmomenteinflüsse gut kompensiert werden, so dass kein unerwünschtes Verkippen/Verklemmen der Spindel auftreten kann. Mittels der federnden Klemmung der Gleitlager in dem Bügel ist bei dem erfindungsgemäßen Bremskraftverstärker eine spielbehaftete Gleitlager-Führung realisiert, so dass unterschiedliche thermische Ausdehnungen aufgrund von verschiedenen Wärmeausdehnungskoeffizienten der Materialien der Gleitlager gegenüber dem Bügel kompensierbar sind. Die spielbehaftete Gleitlager-Führung an dem erfindungsgemäßen Bremskraftverstärker ermöglicht auch einen Ausgleich von Winkelfehlern und einen Ausgleich von Bauteiltoleranzen. Gegenüber der herkömmlichen Gleitlager-Führung, wie sie oben beschrieben ist, ist bei dem erfindungsgemäßen Bremskraftverstärker jedoch eine Geräuscherzeugung aufgrund eines Anschlagens/Anstoßens eines in eine Nut eines Gleitlagers hineinragenden Randbereichs des Bügels an einer Nutinnenwand der jeweiligen Nut nicht zu befürchten. Mittels der federnden Klemmen der Gleitlager in der senkrecht zu der Spindelachse ausgerichteten Ebene kann auf die Ausbildung eines Spalts zwischen den in die Nut hineinragenden Randbereich des Bügels und der Nutinnenwand der jeweiligen Bügel problemlos verzichtet werden. Damit kann auch kein Anschlag-Geräusch oder Klicken aufgrund eines Schließens des Spalts ausgelöst werden. Die vorliegende Erfindung trägt somit zur Komfortsteigerung für einen Fahrer eines mit dem erfindungsgemäßen elektromechanischen Bremskraftverstärker, bzw. dem damit ausgebildeten Bremssystem, ausgestatteten Fahrzeugs bei.

In einer vorteilhaften Ausführungsform des elektromechanischen Bremskraftverstärkers weist das erste Gleitlager an einer ersten Seite ein erstes starres U-Profil und an einer zweiten Seite ein erstes elastisches U-Profil auf und/oder das zweite Gleitlager weist an einer ersten Seite ein zweites starres U-Profil und an einer zweiten Seite ein zweites elastisches U-Profil auf. Ein derart ausgebildetes erstes/zweites Gleitlager kann problemlos so in der zugeordneten Öffnung des Bügels federnd geklemmt vorliegen, dass kein Anschlagen des Gleitlagers, insbesondere einer Gleitlager-Nut, an dem Bügel auftreten kann. Selbst bei einer großen Last und/oder einer hohen Betätigungsgeschwindigkeit des jeweiligen elektromechanischen Bremskraftverstärkers ist damit kein lautes Geräusch aufgrund des Anschlagens des Gleitlagers an dem Bügel zu befürchten.

Vorzugsweise ist das erste Gleitlager derart in der ersten Öffnung des Bügels federnd geklemmt, dass ein mittels der in die Rotation versetzten Spindelmutter auf das erste Gleitlager übertragenes Drehmoment mittels des ersten starren U-Profils abgestützt ist, und/oder das zweite Gleitlager ist derart in der zweiten Öffnung des Bügels federnd geklemmt, dass ein mittels der in die Rotation versetzten Spindelmutter auf das zweite Gleitlager übertragenes Drehmoment mittels des zweiten starren U-Profils abgestützt ist. Diese Ausführungsform des elektromechanischen Bremskraftverstärkers nutzt damit die Tatsache, dass ein Drehmoment in der Regel nur in eine definierte Drehrichtung wirkt und sich über Querkräfte, welche von dem zugeordneten Zuganker in Richtung des kontaktierten starren U-Profils ausgerichtet sind, abstützt. Störkräfte in eine den Querkräften entgegen gerichtete Raumrichtung sind während eines Normalbetriebs des elektromechanischen Bremskraftverstärkers selten. Deshalb weist der hier beschriebene elektromechanische Bremskraftverstärker eine besonders vorteilhafte Führung der Spindel mittels des Bügels und der vorteilhaft darin eingesetzten Gleitlager an den Zugankern auf.

Bevorzugter Weise ist an einer Innenseite des ersten elastischen U-Profils des ersten Gleitlagers ein erster Anschlag ausgebildet, welcher um einen Zwischenspalt von einem den ersten Zuganker umgreifenden ersten Ringbereich des ersten Gleitlagers beabstandet ist, und/oder an einer Innenseite des zweiten elastischen U-Profils des zweiten Gleitlagers ist ein zweiter Anschlag ausgebildet, welcher um einen weiteren Zwischenspalt von einem den zweiten Zuganker umgreifenden zweiten Ringbereich des zweiten Gleitlagers beabstandet ist. Selbst bei einer relativ hohen Last und/oder einer vergleichsweise großen Betätigungsgeschwindigkeit dieser Ausführungsform des elektromechanischen Bremskraftverstärkers kann ein Anschlagen des ersten oder zweiten Ringbereichs an dem benachbarten ersten oder zweiten Anschlag kein Anschlag-Geräusch oder Klicken auslösen. Ein derartiger Anschlag ist hingegen so stark gedämpft, dass er geräuschlich für eine Person nicht wahrnehmbar ist.

In einer weiteren vorteilhaften Ausführungsform des elektromechanischen Bremskraftverstärkers ist eine erste Nut an dem ersten Gleitlager ausgebildet und das federnd in der ersten Öffnung des Bügels geklemmte erste Gleitlager ist mittels eines in die erste Nut eingreifenden ersten Randbereichs des Bügels an der ersten Öffnung so gehalten, dass in einer parallel zu der Spindelachse ausgerichteten Raumrichtung ein Spalt zwischen dem ersten Randbereich und der ersten Nutinnenwand der ersten Nut vorliegt. Entsprechend kann auch eine zweite Nut an dem zweiten Gleitlager ausgebildet sein und das federnd in der zweiten Öffnung des Bügels geklemmte zweite Gleitlager kann mittels eines in die zweite Nut eingreifenden zweiten Randbereichs des Bügels an der zweiten Öffnung so gehalten sein, dass in einer parallel zu der Spindelachse ausgerichteten Raumrichtung ein weiterer Spalt zwischen dem zweiten Randbereich und einer zweiten Nutinnenwand der zweiten Nut vorliegt. In diesem Fall ist das erste und/oder zweite Gleitlager in alle Raumrichtungen gegenüber dem Bügel geringfügig kippbar, so dass Winkelfehler und Bauteiltoleranzen ausgleichbar sind.

In einer weiteren vorteilhaften Ausführungsform sind erste Verformungsrippen des ersten Gleitlagers an einem an dem ersten elastischen U-Profil liegenden ersten Bereich der ersten Nutinnenwand der ersten Nut ausgebildet. Entsprechend können zweite Verformungsrippen des zweiten Gleitlagers in einem an dem zweiten elastischen U-Profil liegenden zweiten Bereich der zweiten Nutinnenwand der zweiten Nut ausgebildet sein. Mittels derartiger Verformungsrippen können eine Montage des ersten und/oder zweiten Gleitlagers an dem Bügel erleichtert und dazu aufzubringende Montagekräfte reduziert werden.

Bevorzugter Weise ist das erste Gleitlager als Festlager mittels eines in einer Stiftaufnahmeöffnung des ersten Gleitlagers und in einer weiteren Stiftaufnahmeöffnung des Bügels eingepressten Stifts in der ersten Öffnung fixiert, während das zweite Gleitlager als Loslager in der zweiten Öffnung verschiebbar gelagert ist. Damit ist die Spindel entlang der Zuganker entlang ihrer Spindelachse verschiebbar, ohne dass es zu einem Klemmen des ersten und/oder zweiten Gleitlagers kommt. Man kann dies auch als eine Fixierung des ersten Gleitlagers als Festlager gegenüber einer schwimmenden Lagerung des zweiten Gleitlagers als Loslager umschreiben.

Vorzugsweise ist der Bügel mittels eines Fügeverfahrens axial- und drehfest mit der Spindel verbunden. Beispielsweise kann der Bügel auf die Spindel gepresst und/oder geschweißt sein. Dies gewährleistet einen verlässlichen Halt des Bügels auf der Spindel.

Die vorausgehend beschriebenen Vorteile sind auch bei einem Bremssystem für ein Fahrzeug mit einem derartigen elektromechanischen Bremskraftverstärker gewährleistet. Es wird darauf hingewiesen, dass das Bremssystem gemäß den vorausgehend beschriebenen Ausführungsformen des Bremskraftverstärkers weiterbildbar ist.

Auch ein Ausführen eines korrespondierenden Herstellungsverfahrens für einen elektromechanischen Bremskraftverstärker schafft die oben beschriebenen Vorteile. Des Weiteren ist das Herstellungsverfahren gemäß den oben beschriebenen Ausführungsformen des elektromechanischen Bremskraftverstärkers ebenso weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1a und 1b: schematische Teildarstellungen eines herkömmlichen elektromechanischen Bremskraftverstärkers;
- Fig. 2a bis 2f: schematische Gesamt- und Teildarstellungen einer Ausführungsform des elektromechanischen Bremskraftverstärkers gemäß der vorliegenden Erfindung; und
- Fig. 3: ein Flussdiagramm zum Erläutern einer Ausführungsform des Herstellungsverfahrens für einen elektromechanischen Bremskraftverstärker gemäß der vorliegenden Erfindung.

### Ausführungsformen der Erfindung

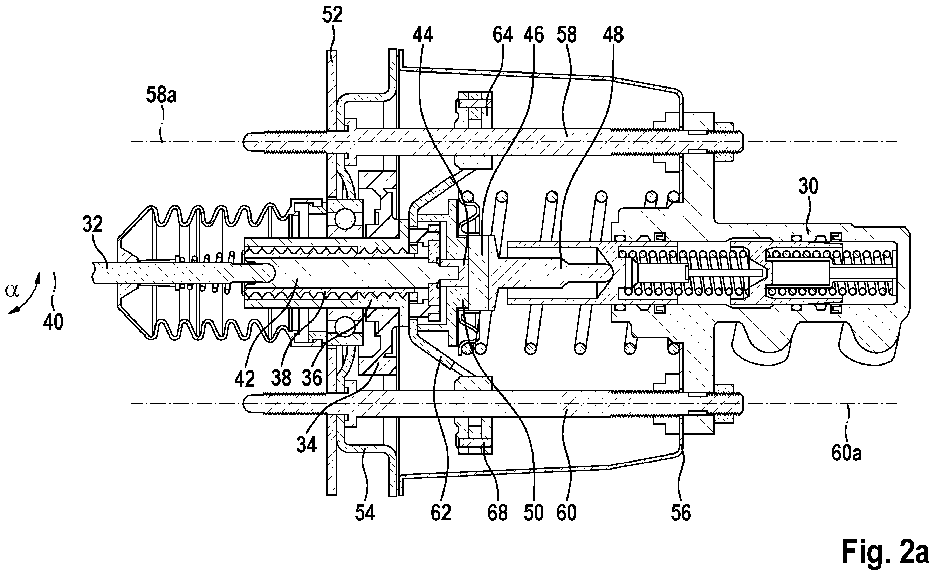

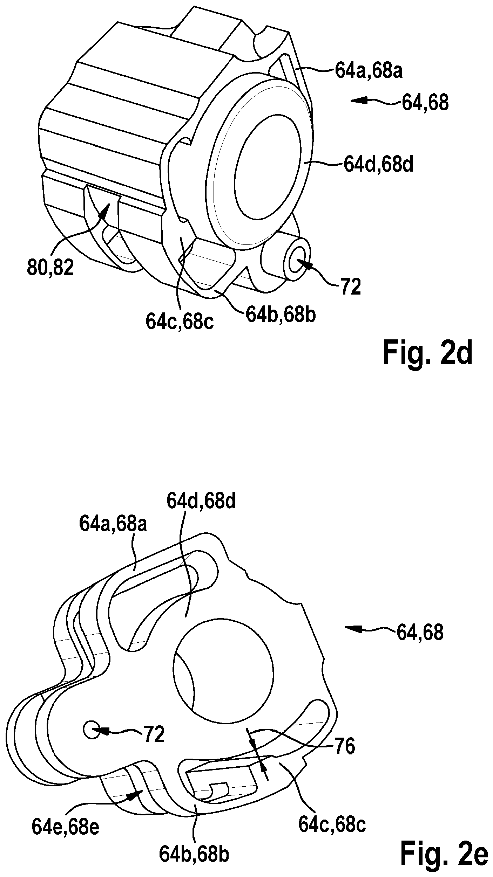

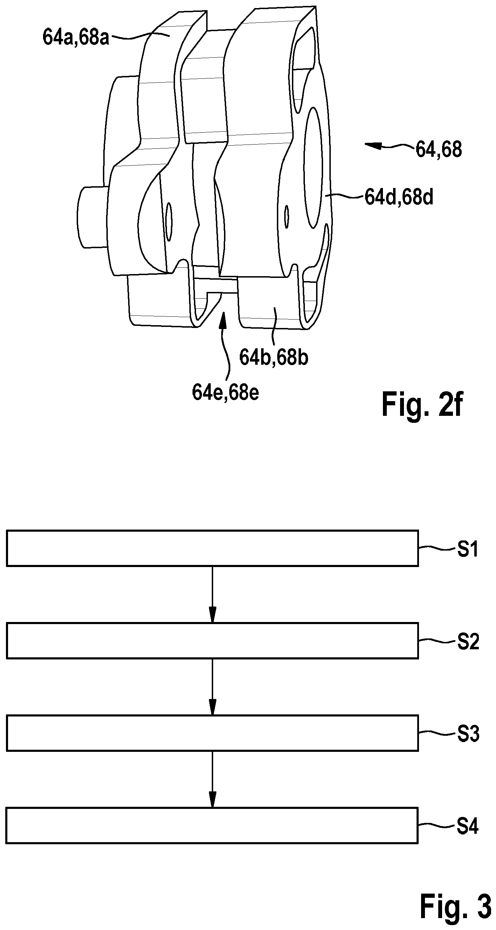

Fig. 2a bis 2f zeigen schematische Gesamt- und Teildarstellungen einer Ausführungsform des elektromechanischen Bremskraftverstärkers gemäß der vorliegenden Erfindung.

Der mittels der Fig. 2a bis 2f schematisch wiedergegebene elektromechanische Bremskraftverstärker kann als Teil eines hydraulischen Bremssystems in einem Fahrzeug/Kraftfahrzeug eingesetzt werden, wobei eine Verwendbarkeit des elektromechanischen Bremskraftverstärkers weder auf einem bestimmten Bremssystemtyp noch auf einen bestimmten Fahrzeugtyp/Kraftfahrzeugtyp limitiert ist.

Der als Gesamtdarstellung in Fig. 2a wiedergegebene elektromechanische Bremskraftverstärker ist zwischen einem (nicht dargestellten) Bremspedal und einem Hauptbremszylinder 30 des mit dem elektromechanischen Bremskraftverstärker ausgestatteten Bremssystems so angeordnet, dass eine auf eine (dem Bremspedal nachgeordnete) Eingangsstange 32 übertragene Fahrerbremskraft mittels des elektromechanischen Bremskraftverstärkers verstärkbar ist. Dazu weist der elektromechanische Bremskraftverstärker einen (nicht skizzierten) elektrischen Motor auf, welcher über ein Getriebe 34 mit einer Spindelmutter 36, die mit einer Spindel 38 in Wirkeingriff vorliegt, so verbunden ist, dass die Spindelmutter 36 in eine Rotation und die Spindel 38 in eine Translationsbewegung entlang ihrer Spindelachse 40 versetzbar/versetzt sind. Für den elektrischen Motor, auf dessen Darstellung in Fig. 2a verzichtet ist, kann jeder für einen elektromechanischen Bremskraftverstärker geeignete Motortyp verwendet werden. Die Spindelmutter 36 wird mittels des Betriebs des elektrischen Motors in die Rotation um die Spindelachse 40 der Spindel 38 versetzt.

Ein von der Eingangsstange 32 kontaktierter Eingangskolben 42 ist so verstellbar innerhalb einer durch die Spindel 38 entlang der Spindelachse 40 verlaufenden Innenbohrung angeordnet, dass die Fahrerbremskraft über den Eingangskolben 42, eine Pastille 44, und eine Reaktionsscheibe 46 auf einen Ausgangskolben 48 übertragbar ist. Auch ein Ventilkörper 50, welcher mittels der Translationsbewegung der Spindel 38 entlang ihrer Spindelachse 40 verstellt ist, drückt gegen die Reaktionsscheibe 46, wodurch die auf den Ausgangskolben 48 übertragene Fahrerbremskraft verstärkbar/verstärkt ist.

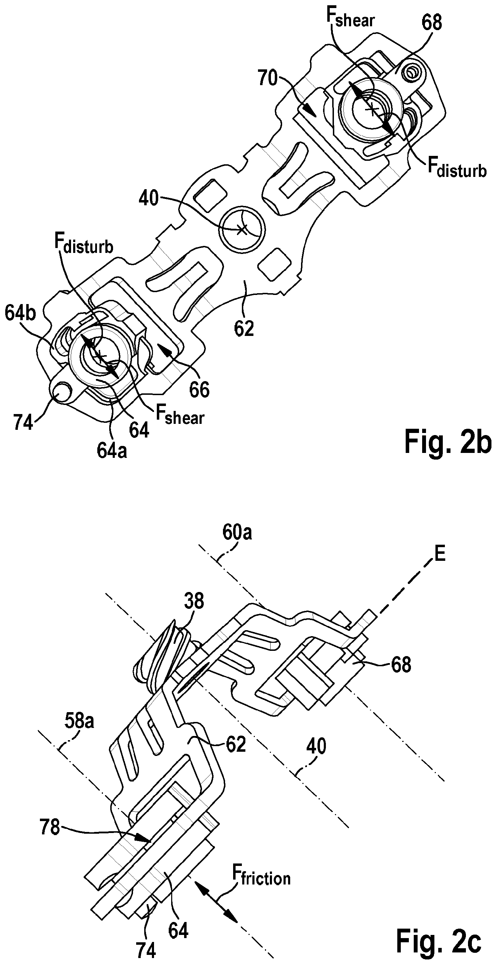

Als ein Gehäuse des elektromechanischen Bremskraftverstärkers sind in Fig. 2a ein an einer Fahrzeugspritzwand 52 befestigter Getriebegehäuseboden 54 und eine Gehäusewand 56 dargestellt. An dem Gehäuse ist ein erster Zuganker 58, welcher sich (im Wesentlichen) parallel zu der Spindelachse 40 der Spindel 38 erstreckt, befestigt. Außerdem ist noch ein zweiter Zuganker 60 an dem Gehäuse so befestigt, dass sich der zweite Zuganker 60 (im Wesentlichen) ebenfalls parallel zu der Spindelachse 40 der Spindel 38 erstreckt. Eine erste Mittellängsachse 58a des ersten Zugankers 58 und eine zweite Mittellängsachse 60a des zweiten Zugankers 60 sind in die Fig. 2a und 2c ebenfalls eingezeichnet.

Der elektromechanische Bremskraftverstärker der Fig. 2a bis 2f weist auch einen an der Spindel 38 befestigten Bügel 62 auf. Beispielsweise kann der Bügel 62 mittels eines Fügeverfahrens axial- und drehfest mit der Spindel 38 verbunden sein. Insbesondere kann der Bügel 62 auf die Spindel 38 gepresst und/oder geschweißt sein. Dies ermöglicht einen verlässlichen Halt des Bügels 62 selbst an der entlang ihrer Spindelachse 40 verstellten Spindel 38 (zur Sicherstellung der Führung der Spindel 38 entlang der Zuganker 58 und 60).

Ein den ersten Zuganker 58 umgreifendes erstes Gleitlager 64 ist in einer ersten Öffnung 66 des Bügels 62 angeordnet. Entsprechend ist ein den zweiten Zuganker 60 umgreifendes zweites Gleitlager 68 in einer zweiten Öffnung 70 des Bügels 62 angeordnet. Vorzugsweise sind das erste Gleitlager 64 und/oder das zweite Gleitlager 68 aus Kunststoff, insbesondere aus Polyoxymethylen oder Polyamid. Ein derart ausgebildetes Gleitlager 64 oder 68 kann eine reibungs- und verschleißarme Lagerung bzw. Führung der Gleitlager 64 und 68 entlang der Zuganker 58 und 60 ermöglichen.

Das erste Gleitlager 64 und das zweite Gleitlager 68 sind jeweils in einer Ebene E senkrecht zu der Spindelachse 40 federnd in dem Bügel 62 geklemmt. Die im montierten Zustand federnd geklemmten Gleitlager 64 und 68 sind somit in der senkrecht zu der Spindelachse 40 ausgerichteten Ebene E relativ spielfrei. Auf eine Einhaltung eines Spalts in der senkrecht zu der Spindelachse 40 ausgerichteten Ebene E zwischen dem ersten Gleitlager 64 und einem die erste Öffnung 66 umgebenden ersten Randbereich des Bügels 62 oder zwischen dem zweiten Gleitlager 68 und einem die zweite Öffnung 70 umgebenden zweiten Randbereich des Bügels 62 ist damit verzichtet. Eine Bewegung des ersten Gleitlagers 64 in Bezug zu dem Bügel 62 (insbesondere in der senkrecht zu der Spindelachse 40 ausgerichteten Ebene E) und eine Bewegung des zweiten Gleitlagers 68 in Bezug zu dem Bügel 62 (insbesondere in der senkrecht zu der Spindelachse 40 ausgerichteten Ebene E) tritt deshalb nur auf, sofern eine Federkraft der federnden Klemmung überschritten wird. Somit muss auch nicht befürchtet werden, dass eine derartige Bewegung des ersten Gleitlagers 64 oder des zweiten Gleitlagers 68 in Bezug zu dem Bügel 62 zu einem Anschlagen des ersten Gleitlagers 64 oder des zweiten Gleitlagers 68 an dem Bügel 62 führt. Eine derartige Quelle von Anschlag-Geräuschen oder Klick-Geräuschen ist deshalb verlässlich behoben.

Da ein Anschlagen des ersten Gleitlagers 64 oder des zweiten Gleitlagers 68 an den Bügel 62 (insbesondere in der senkrecht zu der Spindelachse 40 ausgerichteten Ebene E) nicht zu befürchten ist, können problemlos unterschiedliche Materialien für den Bügel 62 und für die Gleitlager 64 und 68 verwendet werden. Vorzugsweise ist der Bügel 62 aus Metall. Außerdem kann der Bügel 22 ist derart gekröpft ausgebildet sein, dass, während ein erster Endabschnitt des Bügels 62 mit der daran ausgebildeten ersten Öffnung 66 und ein zweiter Endabschnitt des Bügels 62 mit der daran ausgebildeten zweiten Öffnung 70 in der senkrecht zu der Spindelachse 40 ausgerichteten Ebene E liegen, ein Mittenabschnitt des Bügels 62 in einer zu der Ebene E parallelen versetzten Ebene ausgebildet ist.

Wie in Fig. 2b und 2c erkennbar ist, ist das erste Gleitlager 64 (als Festlager) mittels eines in einer (in Fig. 2d bis 2f dargestellten) ersten Stiftaufnahmeöffnung 72 des ersten Gleitlagers 64 und einer weiteren Stiftaufnahmeöffnung des Bügels 62 eingepressten Stifts 74 in der ersten Öffnung 66 fixiert. Auf den Bügel 62 wirkende Zug- oder Druckkräfte werden deshalb von dem (eine Master-Funktion gegenüber dem zweiten Gleitlager 68 ausführenden) ersten Gleitlager 64 abgefangen/abgestützt. Demgegenüber ist das zweite Gleitlager 68 (als Loslager) in der zweiten Öffnung 70 verschiebbar gelagert. Das zweite Gleitlager 68 ist damit in der zweiten Öffnung 70 radial zu der Spindel 38/ihrer Spindelachse 40 verschiebbar. Man kann dies auch als eine schwimmende Lagerung des zweiten Gleitlagers 68 gegenüber einer fixierten Lagerung des ersten Gleitlagers 64 umschreiben. Damit ist die Spindel 38 entlang des ersten Zugankers 58 und des zweiten Zugankers 60 verschiebbar, wobei mittels der schwimmenden Lagerung des (eine Slave-Funktion gegenüber dem ersten Gleitlager 64 ausführenden) zweiten Gleitlagers 68 ein Klemmen unterbunden ist. Die in einer Master- und Slave-Anordnung vorliegenden Gleitlager 64 und 68 realisieren somit nicht nur eine reibungsarme Lagerung der Spindel 38 an dem ersten Zuganker 58 und an dem zweiten Zuganker 60, sondern auch einen verlässlichen Verklemmschutz.

Das erste Gleitlager 64 weist an einer ersten Seite ein erstes starres U-Profil 64a und an einer (vorzugsweise von der ersten Seite weg gerichteten) zweiten Seite ein erstes elastisches U-Profil 64b auf. Das erste elastische U-Profil 64b kann auch als ein erstes federndes/gefedertes U-Profil 64b bezeichnet werden. Dies gewährleistet sowohl die gewünschte Unterbindung einer Bewegung des ersten Gleitlagers 64 in Bezug zu dem Bügel 62 als auch eine mögliche Pufferung des ersten Gleitlagers 64. Auch das zweite Gleitlager 68 weist vorzugsweise an einer ersten Seite ein zweites starres U-Profil 68a und an einer zweiten Seite ein zweites elastisches U-Profil 68b auf, wobei das zweite elastische U-Profil 68b ein zweites federndes/gefedertes U-Profil 68b bezeichnet werden kann.

Das erste Gleitlager 64 ist derart in der ersten Öffnung 66 des Bügels 62 federnd geklemmt, dass ein (mittels der in die Rotation versetzten Spindelmutter 36) auf das erste Gleitlager 64 übertragenes Drehmoment mittels des ersten starren U-Profils 64a abgestützt ist. Man kann dies auch damit umschreiben, dass das auf das erste Gleitlager 64 übertragene Drehmoment eine Querkraft Fₛₕₑₐᵣ bewirkt, welche in Drehrichtung der Spindelmutter 36 gerichtet ist. Eine entgegen der Querkraft Fₛₕₑₐᵣ ausgerichtete Störkraft F_{disturb} auf das erste Gleitlager 64 ist im Normalbetrieb des elektromechanischen Bremskraftverstärkers weitaus seltener. Dies kann dazu genutzt werden, das erste Gleitlager 64 in der ersten Öffnung 66 derart auszurichten, dass die darauf ausgeübte Querkraft Fₛₕₑₐᵣ mittels des ersten starren U-Profils 64a abgestützt ist, während die seltenere Störkraft F_{disturb} lediglich eine leichte Deformation des ersten elastischen U-Profils 64b bewirkt. Entsprechend kann auch das zweite Gleitlager 68 derart in der zweiten Öffnung 70 des Bügels 62 federnd geklemmt sein, dass ein mittels der in die Rotation versetzten Spindelmutter 36 auf das zweite Gleitlager 68 übertragenes Drehmoment mittels des zweiten starren U-Profils 68a abgestützt ist.

Fig. 2d bis 2f zeigen eine vergrößerte Darstellung des ersten/zweiten Gleitlagers 64 oder 68. Bevorzugter Weise ist an einer Innenseite des ersten elastischen U-Profils 64b des ersten Gleitlagers 64 ein erster Anschlag 64c ausgebildet, welcher um einen Zwischenspalt 76 von einem den ersten Zuganker 58 umgreifenden ersten Ringbereich 64d des ersten Gleitlagers 64 beabstandet ist. Der erste Anschlag 64c dient als Überlastschutz. Die Störkraft F_{disturb} kann den Zwischenspalt 76 zwar schließen (indem der erste Anschlag 64c in Kontakt mit dem ersten Ringbereich 64d gebracht wird), sie kann jedoch das erste elastische U-Profil 64b nicht plastisch verformen. Zusätzlich ist ein Inkontaktbringen des ersten Ringbereichs 64d mit dem ersten Anschlag 64c kaum mit einer Geräuschbildung verbunden, da für das erste Gleitlager 64 in der Regel ein Kunststoff verwendet wird. Als Überlastschutz kann ebenso an einer Innenseite des zweiten elastischen U-Profils 68b des zweiten Gleitlagers 68 ein zweiter Anschlag 68c ausgebildet sein, welcher um einen weiteren Zwischenspalt 76 von einem den zweiten Zuganker 60 umgreifenden zweiten Ringbereich 68d des zweiten Gleitlagers 68 beabstandet ist.

In Fig. 2c bis 2e ist erkennbar, dass eine erste Nut 64e an dem ersten Gleitlager 64 ausgebildet ist. Das federnd in der ersten Öffnung 66 des Bügels 62 geklemmte erste Gleitlager 64 ist mittels des in die erste Nut 64e eingreifenden ersten Randbereichs des Bügels 62 an der ersten Öffnung 66 so gehalten, dass in einer parallel zu der Spindelachse 40 ausgerichteten Raumrichtung ein Spalt 78 zwischen dem ersten Randbereich und einer ersten Nutinnenwand der ersten Nut 64e vorliegt (siehe Fig. 2c). Das erste Gleitlager 64 ist damit leicht gegenüber dem Bügel 62 verkippbar, was eine verklemmfreie Führung der Spindel 38 entlang des ersten Zugankers 58 verbessert. Um ein Verklemmen der Spindel 38 zu verhindern kann auch eine zweite Nut 68e an dem zweiten Gleitlager 68 ausgebildet sein und das federnd in der zweiten Öffnung 70 des Bügels 62 geklemmte zweite Gleitlager 68 kann mittels des in die zweite Nut 68e eingreifenden zweiten Randbereichs des Bügels 62 an der zweiten Öffnung 70 so gehalten sein, dass in einer parallel zu der Spindelachse 430 ausgerichteten Raumrichtung ein weiterer Spalt 78 zwischen dem zweiten Randbereich und einer zweiten Nutinnenwand der zweiten Nut 68e vorliegt.

Die wechselseitig wirkenden Reibkräfte Ffriction können die Gleitlager 64 und 68 innerhalb des jeweiligen Spaltes 78 axial verschieben. Aufgrund der Klemmkraft des gefederten U-Profils 64b und 68b ist die axiale Verschiebung jedoch gedämpft. Diese Dämpfung bewirkt eine Verhinderung von Geräuschen. Außerdem sind die auftretenden Reibkräfte F_{friction} deutlich geringer als die auftretenden Querkräfte Fₛₕₑₐᵣ. (In der Regel beträgt die Reibkraft F_{friction} etwa ein Zehntel der Querkraft Fₛₕₑₐᵣ.)

Wie in Fig. 2d erkennbar ist, sind erste Verformungsrippen 80 des ersten Gleitlagers 64 in einem an dem ersten elastischen U-Profil 64b liegenden ersten Bereich der ersten Nutinnenwand der ersten Nut 64e ausgebildet. Vorteilhaft ist es auch, wenn zweite Verformungsrippen 82 des zweiten Gleitlagers 68 in einem an dem zweiten elastischen U-Profil 68b liegenden zweiten Bereich der zweiten Nutinnenwand der zweiten Nut 68e ausgebildet sind. Aufgrund von Bauteiltoleranzen des Bügels 62 und der Gleitlager 64 und 68 sowie einer Klemmkraft der Gleitlager 64 und 68 können bei einer Montage der Gleitlager 64 und 68 die Montagekräfte herkömmlicherweise vergleichsweise hoch sein. Mittels der Verformungsrippen 80 und 82, welche bei hohen Montagekräften in ihren Höhen leicht verformt werden, können die für die Montage der Gleitlager 64 und 68 aufzubringenden Montagekräfte jedoch reduziert werden.

Es wird abschließend noch darauf hingewiesen, dass der mittels der Fig. 2a bis 2f schematisch wiedergegebene elektromechanische Bremskraftverstärker kostengünstig herstellbar ist und nur vergleichsweise wenig Bauraum benötigt.

Des Weiteren wird auch darauf hingewiesen, dass ein (hydraulisches) Bremssystem für ein Fahrzeug mit einem derartigen elektromechanischen Bremskraftverstärker auch die vorausgehend beschriebenen Vorteile aufweist.

Fig. 3 zeigt ein Flussdiagramm zum Erläutern einer Ausführungsform des Herstellungsverfahrens für einen elektromechanischen Bremskraftverstärker gemäß der vorliegenden Erfindung.

Mittels des im Weiteren beschriebenen Herstellungsverfahrens kann beispielsweise der vorausgehend erläuterte elektromechanische Bremskraftverstärker hergestellt werden. Eine Ausführbarkeit des Herstellungsverfahrens ist jedoch nicht auf den elektromechanischen Bremskraftverstärker der Fig. 2a bis 2f beschränkt.

In einem Verfahrensschritt S1 wird eine mit einer Spindel in einem Wirkeingriff vorliegenden Spindelmutter derart an einem elektrischen Motor angebunden, dass die Spindelmutter mittels eines Betriebs des elektrischen Motors in eine Rotation so versetzt wird, dass die Spindel in eine Translationsbewegung entlang ihrer Spindelachse versetzt wird.

In einem Verfahrensschritt S2 werden ein erstes Gleitlager in einer ersten Öffnung eines an der Spindel befestigten Bügels und ein zweites Gleitlager in einer zweiten Öffnung des Bügels angeordnet. Das erste Gleitlager und das zweite Gleitlager werden jeweils in einer Ebene federnd in dem Bügel geklemmt. Die Ebene, in welcher das erste Gleitlager und das zweite Gleitlager in dem Bügel federnd geklemmt, ist später (d.h. während des Betriebs des elektrischen Motors/elektromechanischen Bremskraftverstärkers) senkrecht zu der Spindelachse ausgerichtet.

In einem Verfahrensschritt S3 wird ein erster Zuganker derart an einem Gehäuse des elektromechanischen Bremskraftverstärkers befestigt, dass das erste Gleitlager den ersten Zuganker umgreift und der erste Zuganker sich parallel zu der Spindelachse der Spindel erstreckt. Entsprechend wird in einem Verfahrensschritt S4 ein zweiter Zuganker derart an dem Gehäuse des elektromechanischen Bremskraftverstärkers befestigt, dass das zweite Gleitlager den zweiten Zuganker umgreift und der zweite Zuganker sich parallel zu der Spindelachse der Spindel erstreckt.

Auch die Verfahrensschritte S1 bis S4, welche deren hier beschriebene Reihenfolge nur beispielhaft zu deuten ist, bewirken die oben schon beschriebenen Vorteile.

## Patentansprüche

1. Elektromechanischer Bremskraftverstärker für ein Fahrzeug mit:
einem Gehäuse (54, 56);
einer Spindelmutter (36), welche mit einer Spindel (38) in einem Wirkeingriff vorliegt;
einem elektrischen Motor, mittels dessen Betrieb die Spindelmutter (36) in eine Rotation derart versetzbar ist, dass die Spindel (38) in eine Translationsbewegung entlang ihrer Spindelachse (40) versetzbar ist;
einem an dem Gehäuse (54, 56) befestigten und sich parallel zu der Spindelachse (40) der Spindel (38) erstreckenden ersten Zuganker (58);
einem an dem Gehäuse (54, 56) befestigten und sich parallel zu der Spindelachse (40) der Spindel (38) erstreckenden zweiten Zuganker (60); und
einem an der Spindel (38) befestigten Bügel (62), wobei ein den ersten Zuganker (58) umgreifendes erstes Gleitlager (64) in einer ersten Öffnung (66) des Bügels (62) und ein den zweiten Zuganker (60) umgreifendes zweites Gleitlager (68) in einer zweiten Öffnung (70) des Bügels (62) angeordnet sind;
**dadurch gekennzeichnet, dass**
das erste Gleitlager (64) und das zweite Gleitlager (68) jeweils in einer Ebene (E) senkrecht zu der Spindelachse (40) federnd in dem Bügel (62) geklemmt sind.

2. Elektromechanischer Bremskraftverstärker nach Anspruch 1, wobei das erste Gleitlager (64) an einer ersten Seite ein erstes starres U-Profil (64a) und an einer zweiten Seite ein erstes elastisches U-Profil (64b) aufweist und/oder das zweite Gleitlager (68) an einer ersten Seite ein zweites starres U-Profil (68a) und an einer zweiten Seite ein zweites elastisches U-Profil (68b) aufweist.

3. Elektromechanischer Bremskraftverstärker nach Anspruch 2, wobei das erste Gleitlager (64) derart in der ersten Öffnung (66) des Bügels (62) federnd geklemmt ist, dass ein mittels der in die Rotation versetzten Spindelmutter (36) auf das erste Gleitlager (64) übertragenes Drehmoment mittels des ersten starren U-Profils (64a) abgestützt ist, und/oder das zweite Gleitlager (68) derart in der zweiten Öffnung (70) des Bügels (62) federnd geklemmt ist, dass ein mittels der in die Rotation versetzten Spindelmutter (36) auf das zweite Gleitlager (68) übertragenes Drehmoment mittels des zweiten starren U-Profils (68a) abgestützt ist.

4. Elektromechanischer Bremskraftverstärker nach Anspruch 2 oder 3, wobei an einer Innenseite des ersten elastischen U-Profils (64b) des ersten Gleitlagers (64) ein erster Anschlag (64c) ausgebildet ist, welcher um einen Zwischenspalt (76) von einem den ersten Zuganker (58) umgreifenden ersten Ringbereich (64d) des ersten Gleitlagers (64) beabstandet ist, und/oder an einer Innenseite des zweiten elastischen U-Profils (68b) des zweiten Gleitlagers (68) ein zweiter Anschlag (68c) ausgebildet ist, welcher um einen weiteren Zwischenspalt (76) von einem den zweiten Zuganker (60) umgreifenden zweiten Ringbereich (68d) des zweiten Gleitlagers (68) beabstandet ist.

5. Elektromechanischer Bremskraftverstärker nach einem der vorhergehenden Ansprüche, wobei eine erste Nut (64e) an dem ersten Gleitlager (64) ausgebildet ist und das federnd in der ersten Öffnung (66) des Bügels (62) geklemmte erste Gleitlager (64) mittels eines in die erste Nut (64e) eingreifenden ersten Randbereichs des Bügels (62) an der ersten Öffnung (66) so gehalten ist, dass in einer parallel zu der Spindelachse (40) ausgerichteten Raumrichtung ein Spalt (78) zwischen dem ersten Randbereich und einer ersten Nutinnenwand der ersten Nut (64e) vorliegt, und/oder eine zweite Nut (68e) an dem zweiten Gleitlager (68) ausgebildet ist und das federnd in der zweiten Öffnung (70) des Bügels (62) geklemmte zweite Gleitlager (68) mittels eines in die zweite Nut (68e) eingreifenden zweiten Randbereichs des Bügels (62) an der zweiten Öffnung (70) so gehalten ist, dass in einer parallel zu der Spindelachse (40) ausgerichteten Raumrichtung ein weiterer Spalt (78) zwischen dem zweiten Randbereich und einer zweiten Nutinnenwand der zweiten Nut (68e) vorliegt.

6. Elektromechanischer Bremskraftverstärker nach den Ansprüchen 2 und 5, wobei erste Verformungsrippen (80) des ersten Gleitlagers (64) an einem an dem ersten elastischen U-Profil (64b) liegenden ersten Bereich der ersten Nutinnenwand der ersten Nut (64e) ausgebildet sind und/oder zweite Verformungsrippen (82) des zweiten Gleitlagers (68) in einem an dem zweiten elastischen U-Profil (68b) liegenden zweiten Bereich der zweiten Nutinnenwand der zweiten Nut (68e) ausgebildet sind.

7. Elektromechanischer Bremskraftverstärker nach einem der vorhergehenden Ansprüche, wobei das erste Gleitlager (64) als Festlager mittels eines in einer Stiftaufnahmeöffnung (72) des ersten Gleitlagers (64) und in einer weiteren Stiftaufnahmeöffnung des Bügels (62) eingepressten Stifts (74) in der ersten Öffnung (66) fixiert ist, während das zweite Gleitlager (68) als Loslager in der zweiten Öffnung (70) verschiebbar gelagert ist.

8. Elektromechanischer Bremskraftverstärker nach einem der vorhergehenden Ansprüche, wobei der Bügel (62) mittels eines Fügeverfahrens axial- und drehfest mit der Spindel (38) verbunden.

9. Bremssystem für ein Fahrzeug mit einem elektromechanischen Bremskraftverstärker nach einem der vorhergehenden Ansprüche.

10. Herstellungsverfahren für einen elektromechanischen Bremskraftverstärker mit den Schritten:
Anbinden einer mit einer Spindel (38) in einem Wirkeingriff vorliegenden Spindelmutter (36) derart an einem elektrischen Motor, dass die Spindelmutter (36) mittels eines Betriebs des elektrischen Motors in eine Rotation so versetzt wird, dass die Spindel (38) in eine Translationsbewegung entlang ihrer Spindelachse (40) versetzt wird (S1);
Anordnen eines ersten Gleitlagers (64) in einer ersten Öffnung (66) eines an der Spindel (38) befestigten Bügels (62) und eines zweiten Gleitlagers (68) in einer zweiten Öffnung (70) des Bügels (62);
Befestigen eines ersten Zugankers (58) derart an einem Gehäuse (54, 56) des elektromechanischen Bremskraftverstärkers, dass das erste Gleitlager (64) den ersten Zuganker (58) umgreift und der erste Zuganker (58) sich parallel zu der Spindelachse (40) der Spindel (38) erstreckt (S3); und
Befestigen eines zweiten Zugankers (60) derart an dem Gehäuse (54, 56) des elektromechanischen Bremskraftverstärkers, dass das zweite Gleitlager (68) den zweiten Zuganker (60) umgreift und der zweite Zuganker (60) sich parallel zu der Spindelachse (40) der Spindel (38) erstreckt (S4);
**dadurch gekennzeichnet, dass**
das erste Gleitlager (64) und das zweite Gleitlager (68) jeweils in einer später senkrecht zu der Spindelachse (40) ausgerichteten Ebene (E) federnd in dem Bügel (62) geklemmt werden (S2).

## Claims

1. Electromechanical brake booster for a vehicle, having:
a housing (54, 56);
a spindle nut (36) which is in operative engagement with a spindle (38);
an electric motor by means of the operation of which the spindle nut (36) can be set in rotation such that the spindle (38) can be set in translational motion along its spindle axis (40);
a first tie rod (58) which is fastened to the housing (54, 56) and which extends parallel to the spindle axis (40) of the spindle (38);
a second tie rod (60) which is fastened to the housing (54, 56) and which extends parallel to the spindle axis (40) of the spindle (38); and
a bracket (62) which is fastened to the spindle (38), wherein a first plain bearing (64) which engages around the first tie rod (58) is arranged in a first opening (66) of the bracket (62) and a second plain bearing (68) which engages around the second tie rod (60) is arranged in a second opening (70) of the bracket (62);
**characterized in that**
the first plain bearing (64) and the second plain bearing (68) are each clamped, resiliently in a plane (E) perpendicular to the spindle axis (40), in the bracket (62) .

2. Electromechanical brake booster according to Claim 1, wherein the first plain bearing (64), at a first side, has a first rigid U-shaped profile (64a) and, at a second side, has a first elastic U-shaped profile (64b), and/or the second plain bearing (68), at a first side, has a second rigid U-shaped profile (68a) and, at a second side, has a second elastic U-shaped profile (68b).

3. Electromechanical brake booster according to Claim 2, wherein the first plain bearing (64) is clamped resiliently in the first opening (66) of the bracket (62) such that a torque transmitted to the first plain bearing (64) by the spindle nut (36) that has been set in rotation is supported by means of the first rigid U-shaped profile (64a), and/or the second plain bearing (68) is clamped resiliently in the second opening (70) of the bracket (62) such that a torque transmitted to the second plain bearing (68) by means of the spindle nut (36) that has been set in rotation is supported by means of the second rigid U-shaped profile (68a).

4. Electromechanical brake booster according to Claim 2 or 3, wherein, on an inner side of the first elastic U-shaped profile (64b) of the first plain bearing (64), there is formed a first stop (64c) which is spaced apart by an intermediate gap (76) from a first ring region (64d), which engages around the first tie rod (58), of the first plain bearing (64), and/or, on an inner side of the second elastic U-shaped profile (68b) of the second plain bearing (68), there is formed a second stop (68c) which is spaced apart by a further intermediate gap (76) from a second ring region (68b), which engages around the second tie rod (60), of the second plain bearing (68).

5. Electromechanical brake booster according to any of the preceding claims, wherein a first groove (64e) is formed on the first plain bearing (64), and the first plain bearing (64) which is clamped resiliently in the first opening (66) of the bracket (62) is held on the first opening (66) by means of a first edge region, which engages into the first groove (64e), of the bracket (62) such that, in a spatial direction oriented parallel to the spindle axis (40), a gap (78) is present between the first edge region and a first groove inner wall of the first groove (64e), and/or a second groove (68e) is formed on the second plain bearing (68), and the second plain bearing (68) which is clamped resiliently in the second opening (70) of the bracket (62) is held on the second opening (70) by means of a second edge region, which engages into the second groove (68e), of the bracket (62) such that, in a spatial direction oriented parallel to the spindle axis (40), a further gap (78) is present between the second edge region and a second groove inner wall of the second groove (68e).

6. Electromechanical brake booster according to Claims 2 and 5, wherein first deformation ribs (80) of the first plain bearing (64) are formed on a first region, situated on the first elastic U-shaped profile (64b), of the first groove inner wall of the first groove (64e), and/or second deformation ribs (82) of the second plain bearing (68) are formed in a second region, situated on the second elastic U-shaped profile (68b), of the second groove inner wall of the second groove (68e).

7. Electrochemical brake booster according to any of the preceding claims, wherein the first plain bearing (64), as a fixed bearing, is fixed in the first opening (66) by means of a pin (74) which is pressed into a pin-receiving opening (72) of the first plain bearing (64) and into a further pin-receiving opening of the bracket (62), whereas the second plain bearing (68), as a floating bearing, is mounted displaceably in the second opening (70).

8. Electromechanical brake booster according to any of the preceding claims, wherein the bracket (62) is connected to the spindle (38) in an axially fixed and rotationally fixed manner by means of a joining process.

9. Brake system for a vehicle having electrochemical brake booster according to any of the preceding claims.

10. Production method for an electromechanical brake booster, having the steps:
attaching a spindle nut (36), which is in operative engagement with a spindle (38), to an electric motor such that, by means of operation of the electric motor, the spindle nut (36) is set in rotation such that the spindle (38) is set in translational motion along its spindle axis (40) (S1);
arranging a first plain bearing (64) in a first opening (66) of a bracket (62) which is fastened to the spindle (38), and arranging a second plain bearing (68) in a second opening (70) of the bracket (62);
fastening a first tie rod (58) to a housing (54, 56) of the electromechanical brake booster such that the first plain bearing (64) engages around the first tie rod (58) and the first tie rod (58) extends parallel to the spindle axis (40) of the spindle (38) (S3); and
fastening a second tie rod (60) to the housing (54, 56) of the electromechanical brake booster such that the second plain bearing (68) engages around the second tie rod (60) and the second tie rod (60) extends parallel to the spindle axis (40) of the spindle (38) (S4);
**characterized in that**
the first plain bearing (64) and the second plain bearing (68) are each clamped, resiliently in a plane (E) that will later be oriented perpendicular to the spindle axis (40), in the bracket (62) (S2).

## Revendications

1. Servofrein électromécanique pour un véhicule, comportant :
un boîtier (54, 56) ;
un écrou de broche (36), lequel est en prise fonctionnelle avec une broche (38) ;
un moteur électrique, grâce au fonctionnement duquel l'écrou de broche (36) peut être mis en rotation, de telle sorte que la broche (38) puisse être déplacée selon un mouvement de translation le long de son axe de broche (40) ;
un premier tirant (58) fixé au boîtier (54, 56) et s'étendant parallèlement à l'axe de broche (40) de la broche (38) ;
un deuxième tirant (60) fixé au boîtier (54, 56) et s'étendant parallèlement à l'axe de broche (40) de la broche (38) ; et
un étrier (62) fixé à la broche (38), dans lequel un premier palier lisse (64) entourant le premier tirant (58) est disposé dans une première ouverture (66) de l'étrier (62) et un deuxième palier lisse (68) entourant le deuxième tirant (60) est disposé dans une deuxième ouverture (70) de l'étrier (62) ;
**caractérisé en ce que**
le premier palier lisse (64) et le deuxième palier lisse (68) sont serrés de manière élastique dans l'étrier (62) respectivement dans un plan (E) perpendiculaire à l'axe de broche (40).

2. Servofrein électromécanique selon la revendication 1, dans lequel le premier palier lisse (64) comprend un premier profilé en U rigide (64a) sur un premier côté et un premier profilé en U élastique (64b) sur un deuxième côté et/ou le deuxième palier lisse (68) comprend un deuxième profilé en U rigide (68a) sur un premier côté et un deuxième profilé en U élastique (68b) sur un deuxième côté.

3. Servofrein électromécanique selon la revendication 2, dans lequel le premier palier lisse (64) est serré de manière élastique dans la première ouverture (66) de l'étrier (62), de telle sorte qu'un couple transmis au premier palier lisse (64) au moyen de l'écrou de broche (36) mis en rotation soit supporté au moyen du premier profilé en U rigide (64a), et/ou le deuxième palier lisse (68) est serré de manière élastique dans la deuxième ouverture (70) de l'étrier (62), de telle sorte qu'un couple transmis au deuxième palier lisse (68) au moyen de l'écrou de broche (36) mis en rotation soit supporté au moyen du deuxième profilé en U rigide (68a).

4. Servofrein électromécanique selon la revendication 2 ou 3, dans lequel une première butée (64c) est formée sur un côté intérieur du premier profilé en U élastique (64b) du premier palier lisse (64), laquelle butée est espacée, par un interstice intermédiaire (76), d'une première région annulaire (64d) du premier palier lisse (64) entourant le premier tirant (58), et/ou une deuxième butée (68c) est formée sur un côté intérieur du deuxième profilé en U élastique (68b) du deuxième palier lisse (68), laquelle butée est espacée, par un autre interstice intermédiaire (76), d'une deuxième région annulaire (68d) du deuxième palier lisse (68) entourant le deuxième tirant (60).

5. Servofrein électromécanique selon l'une des revendications précédentes, dans lequel une première rainure (64e) est formée sur le premier palier lisse (64) et le premier palier lisse (64) serré de manière élastique dans la première ouverture (66) de l'étrier (62) est retenu au niveau de la première ouverture (66) au moyen d'une première région de bord de l'étrier (62) venant en prise dans la première rainure (64e), de telle sorte que, dans une direction spatiale orientée parallèlement à l'axe de broche (40), un interstice (78) est présent entre la première région de bord et une première paroi intérieure de la première rainure (64e), et/ou une deuxième rainure (68e) est formée sur le deuxième palier lisse (68) et le deuxième palier lisse (68) serré de manière élastique dans la deuxième ouverture (70) de l'étrier (62) est retenu au niveau de la deuxième ouverture (70) au moyen d'une deuxième région de bord de l'étrier (62) venant en prise dans la deuxième rainure (68e), de telle sorte que, dans une direction spatiale orientée parallèlement à l'axe de broche (40), un autre interstice (78) est présent entre la deuxième région de bord et une deuxième paroi intérieure de la deuxième rainure (68e).

6. Servofrein électromécanique selon les revendications 2 et 5, dans lequel des premières nervures de déformation (80) du premier palier lisse (64) sont formées sur une première région de la première paroi intérieure de la première rainure (64e), laquelle région est située sur le premier profilé en U élastique (64b), et/ou des deuxièmes nervures de déformation (82) du deuxième palier lisse (68) sont formées sur une deuxième région de la deuxième paroi intérieure de la deuxième rainure (68e), laquelle région est située sur le deuxième profilé en U élastique (68b).

7. Servofrein électromécanique selon l'une des revendications précédentes, dans lequel le premier palier lisse (64) est, en tant que palier fixe, fixé dans la première ouverture (66) au moyen d'une goupille (74) enfoncée dans une ouverture de réception de goupille (72) du premier palier lisse (64) et dans une autre ouverture de réception de goupille de l'étrier (62), tandis que le deuxième palier lisse (68) est, en tant que palier libre, monté mobile dans la deuxième ouverture (70).

8. Servofrein électromécanique selon l'une des revendications précédentes, dans lequel l'étrier (62) est relié de manière fixe axialement et de manière solidaire en rotation à la broche (38) grâce à un procédé d'assemblage.

9. Système de freinage pour un véhicule comportant un servofrein électromécanique selon l'une des revendications précédentes.

10. Procédé de fabrication pour un servofrein électromécanique, comportant les étapes :
connexion d'un écrou de broche (36) en prise fonctionnelle avec une broche (38) à un moteur électrique, de telle sorte que l'écrou de broche (36) soit mis en rotation grâce à un fonctionnement du moteur électrique, de telle sorte que la broche (38) soit déplacée selon un mouvement de translation le long de son axe de broche (40) (S1) ;
disposition d'un premier palier lisse (64) dans une première ouverture (66) d'un étrier (62) fixé à la broche (38) et d'un deuxième palier lisse (68) dans une deuxième ouverture (70) de l'étrier (62) ;
fixation d'un premier tirant (58) à un boîtier (54, 56) du servofrein électromécanique, de telle sorte que le premier palier lisse (64) entoure le premier tirant (58) et que le premier tirant (58) s'étende parallèlement à l'axe de broche (40) de la broche (38) (S3) ; et
fixation d'un deuxième tirant (60) au boîtier (54, 56) du servofrein électromécanique, de telle sorte que le deuxième palier lisse (68) entoure le deuxième tirant (60) et que le deuxième tirant (60) s'étende parallèlement à l'axe de broche (40) de la broche (38) (S4) ;
**caractérisé en ce que**
le premier palier lisse (64) et le deuxième palier lisse (68) sont serrés de manière élastique dans l'étrier (62) respectivement dans un plan (E) orienté ultérieurement perpendiculairement à l'axe de broche (40) (S2).
